# EUROPÄISCHE PATENTSCHRIFT

(11) **EP 0 525 519 B1**
(45) Veröffentlichungstag und Bekanntmachung des Hinweises auf die Patenterteilung: **18.12.1996**
(21) Anmeldenummer: 92112104.2
(22) Anmeldetag: 15.07.1992
(51) Int. Cl.: B32B 7/02, B32B 27/32, B32B 33/00, B29C 61/06

(54) **Wärmeschrumpfbare Verbundfolie**
Heat-shrinkable composite sheet
Feuille composite rétrécissable

(30) Priorität: 22.07.1991 DE 4124274
(43) Veröffentlichungstag der Anmeldung: 03.02.1993
(73) Patentinhaber: RXS Kabelgarnituren Gesellschaft mit beschränkter Haftung, D-58093 Hagen (DE)
(72) Erfinder: Kupczyk, Andreas, W-5800 Hagen 1 (DE); Pieper, Detlef, Dr. rer. nat., W-8633 Rödental (DE)
(74) Vertreter: Fuchs, Franz-Josef, Dr.-Ing.

(56) Entgegenhaltungen:
- EP-A- 0 273 459
- EP-A- 0 299 439
- EP-A- 0 341 753
- EP-A- 0 385 141
- EP-A- 0 437 708
- EP-A- 0 445 381
- US-A- 4 559 973

## Beschreibung

Die Erfindung betrifft eine wärmeschrumpfbare Verbundfolie für die Herstellung von einreißfesten Umhüllungen, insbesondere für Rohre, Kabel, Kabelverbindungen oder dergleichen.

Eine derartige wärmeschrumpfbare Verbundfolie ist durch das deutsche Gebrauchsmuster 75 01 913 bekannt. Dort wird eine wärmeschrumpfbare, rohrförmgie Verbindungsmuffe beschrieben, die aus einer einzigen wärmeschrumpfbaren Folie und einer schmelzbaren Folienschicht aus Schmelzkleber besteht, wobei stabförmige Einlagen als Verstärkung angeordnet sind. Zur Verstärkung dieser Umhüllung dienen diese Verstärkungselemente, die in Form von mechanisch festen Längsstäben eingelagert sind, wobei diese quer zur Schrumpfrichtung der Verbindungsmuffe verlaufen. Auf diese Weise behindern die Verstärkungselemente den Schrumpfvorgang nicht. Somit ist wohl ein Schutz gegen Ein- bzw. Weiterreißen in Schrumpfrichtung gegeben, doch senkrecht dazu wird keine Verstärkung erhalten. Doch gerade diese Richtung ist besonders gegen Ein- bzw. Weiterreißen gefährdet, da hier die Schrumpfkräfte wirksam sind und die Umhüllung weiter auseinanderziehen.

Weiterhin sind aus der europäischen Patentanmeldung EP 0 299 439 Einlagerungen von gitterförmigen Verstärkungselementen bekannt, durch die ebenfalls versucht wird, die Ein- bzw. Weiterreißfestigkeit von schrumpfbaren Umhüllungen zu verbessern. Doch ist bei diesen Ausführungen problemhaft, daß das Schrumpfvermögen unter Umständen ungünstig beeinflußt wird.

Aufgabe der Erfindung ist, eine wärmeschrumpfbare Verbundfolie zu schaffen, bei der die Neigung zum Ein- bzw. Weiterreißen der Umhüllung unterbunden wird, wobei insbesondere eine Verbesserung der Ein- bzw. Weiterreißfestigkeit in der Richtung verbessert werden soll, die quer zur Schrumpfrichtung verläuft. Die gestellte Aufgabe wird gemäß der Erfindung mit einer Verbundfolie der eingangs erläuterten Art dadurch gelöst, daß eine erste schrumpfbare Flächenfolie mit einer ersten Schrumpfrichtung auf einer zweiten schrumpfbaren Flächenfolie mit einer von der ersten Schrumpfrichtung unter einem Versetzungswinkel abweichenden zweiten Schrumpfrichtung fest haftend so angeordnet ist, daß die Verbundfolie bzw. ein Verbundfolienabschnitt eine resultierende, zwischen den Schrumpfrichtungen der einzelnen Flächenfolien liegende Schrumpfrichtung aufweist.

Bei den wärmeschrumpfbaren Verbundfolien und den daraus hergestellten Verbundfolienabschnitten, zum Beispiel für Umhüllungen von Rohren, Kabeln, Kabelverbindungen oder dergleichen, gemäß der Erfindung ist von großem Vorteil, daß nur gleichartige Verbundmaterialien verwendet werden, die selbstschrumpfend sind, so daß eine eigentliche Behinderung wie bei unschrumpfbaren Einlagen nicht gegeben ist. So werden bei einer derartigen Verbundfolie mehrere, jedoch mindestens zwei, schrumpfbare Flächenfolien übereinander fest haftend zusammengebracht, wobei die Schrumpfrichtungen dieser einzelnen Flächenfolien unter einem Winkel zueinander verlaufen. Daraus ergibt sich eine resultierende Schrumpfrichtung für die gesamte wärmeschrumpfbare Verbundfolie. Da die Neigung des Ein- bzw. Weiterreißens bei Schrumpfprodukten besonders in einer senkrecht zur Schrumpfrichtung verlaufenden Richtung besteht, wird nun aus der Verbundfolie ein Verbundfolienabschnitt so ausgeschnitten, daß die resultierende Schrumpfrichtung quer zur in Frage stehenden Ein- bzw. Weiterreißrichtung steht. Dies bedeutet aufgrund des Verbundfolienaufbaus, daß die eigentliche Schrumpfrichtung jeder Flächenfolie nicht mehr senkrecht sondern in einem Winkel zur in Frage stehenden Ein- bzw. Weiterreißrichtung steht und daß dadurch die Voraussetzung zum Ein- bzw. Weiterreißen erheblich gemindert ist. Wichtig ist hierbei, daß die resultierende Schrumpfrichtung der gesamten Verbundfolie parallel zur gewünschten Schrumpfrichtung verläuft, das heißt, im allgemeinen parallel zur Kante des Verbundfolienabschnittes, die beim Schrumpfen verkürzt wird.

Die einzelnen Flächenfolien werden in geeigneter Weise, zum Beispiel durch Vernetzen der Grenzflächen oder durch wärmefeste Klebmittel festhaftend miteinander verbunden, so daß die Flächenfolien mit ihren verschiedenen voneinander abweichenden Schrumpfrichtungen auch bei Schrumpftemperatur eine Einheit bilden.

Eine solche wärmeschrumpfbare Verbundfolie gemäß der Erfindung kann für beliebige Anwendungen vorgesehen werden, wobei sie entsprechend des Einsatzfalles mit zusätzlichen Einrichtungen, wie zum Beispiel mit Verschlußeinrichtungen entlang der Längskanten, ausgestattet werden kann.

Die Erfindung wird nun anhand von vier Figuren näher erläutert.
- Figur 1: zeigt den Prinzipaufbau einer wärmeschrumpfbaren Verbundfolie gemäß der Erfindung.
- Figur 2: zeigt einen Verbundfolienabschnitt, bei dem die einzelnen Flächenfolien direkt miteinander festhaftend verbunden sind.
- Figur 3: zeigt einen Verbundfolienabschnitt, bei dem zwischen den einzelnen Flächenfolien ein Verbindungsmittel eingebracht ist.
- Figur 4: zeigt ein Anwendungsbeispiel für eine wärmeschrumpfbare Verbundfolie gemäß der Erfindung.

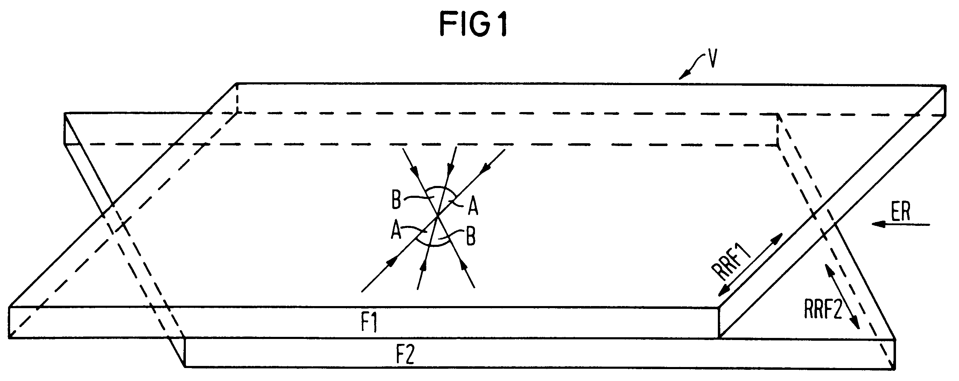

In der Figur 1 wird das Grundprinzip der Erfindung gezeigt. Es werden zwei schrumpfbare Flächenfolien F1 und F2, die in an sich bekannter Weise extrudiert, vernetzt und gereckt sind, aufeinander gebracht und fest haftend miteinander verbunden. Ausschlaggebend ist jedoch, daß die beiden schrumpfbaren Flächenfolien so aufeinander gebracht sind, daß ihre Reckrichtungen RRF1 und RRF2 und damit auch ihre Schrumpfrichtungen SRF1 und SRF2 unter einen Winkel A + B zueinander liegen. Damit ergibt sich eine über die beiden fest haftenden Flächenfolien F1 und F2 hinweggesehen resultierende Schrumpfrichtung SRV, die zwischen den beiden Einzelschrumpfrichtungen SRF1 und SRF2 liegt. Damit ist eine wärmeschrumpfbare Verbundfolie V mit einer resultierenden Schrumpfrichtung SRV geschaffen. Da bei Schrumpfprodukten die Neigung zum Ein- bzw. Weiterreißen am größten in der senkrecht zur Schrumpfrichtung verlaufenden Richtung erfolgt, liegt der Erfindung der Gedanke zugrunde, daß man aus der hergestellten Verbundfolie V entsprechende Verbundfolienabschnitte VA fertigt, deren resultierende Schrumpfrichtung SRVA in der gewünschten Schrumpfrichtung verläuft, wobei dann wieder die Neigung zum Ein- bzw. Weiterreißen in senkrechter Richtung ER hierzu am größten ist. Dies bedeutet aber, daß die Schrumpfrichtungen SRF1 und SRF2 der einzelnen Flächenfolien F1 und F2 unter einem Winkel zur hauptsächlichen Einreißrichtung ER verlaufen und damit ist die Neigung zum Ein- bzw. Weiterreißen in den einzelnen Flächenfolien weitgehend so verringert, daß die Verbundfolie nahezu als reißfest, zumindest im Bereich der Schrumpftemperaturen, angesehen werden kann. Der gegenseitige Versetzungswinkel A + B sollte dabei kleiner sein als 90^{o}. Bei größeren Versetzungswinkeln steigt die an sich unerwünschte Schrumpfung in Längsrichtung.

Die Größe des Schrumpfgrades kann für beide Flächenfolien F1 und F2 gleich groß sein; doch können auch verschiedene Schrumpfungsgrade verwendet werden, wobei sich dann der Versetzungswinkel der beiden Flächenfolien bezüglich der resultierenden Schrumpfrichtung ändert. Dadurch ergibt sich dann auch eine entsprechende Winkelversetzung der resultierenden Schrumpfrichtung SRV für die gesamte Verbundfolie V. Das Grundprinzip bleibt jedoch erhalten, wenn die Verbundfolienabschnitte VA so hergestellt werden, daß auch dann die Hauptrichtung des Ein- bzw. Weiterreißens wiederum senkrecht zur resultierenden Schrumpfrichtung des Verbundfolienabschnittes verläuft.

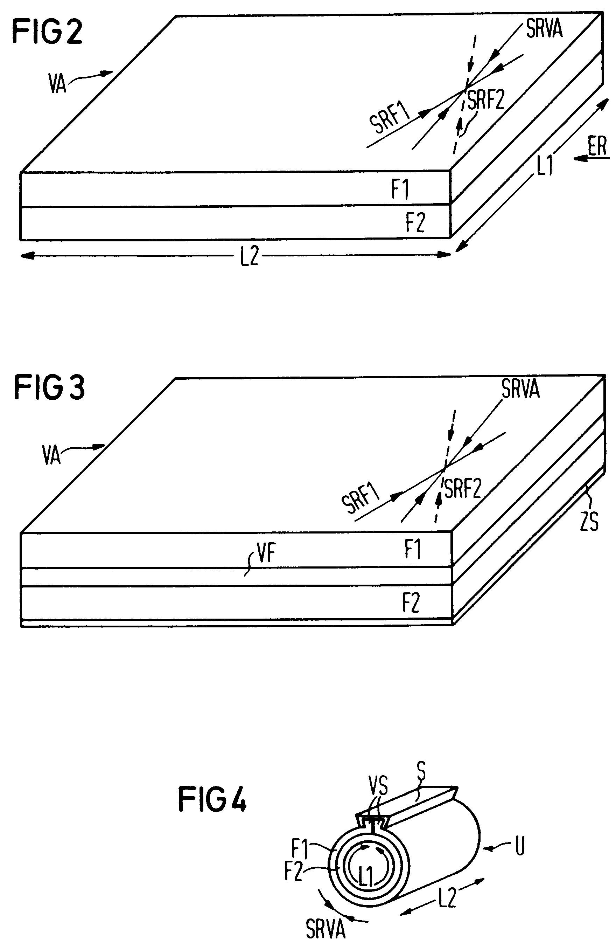

Die Figur 2 zeigt nun einen nach dem Grundprinzip der Erfindung hergestellten Verbundfolienabschnitt VA aus der gesamten Verbundfolie V, wobei die Schnittführung so gewählt ist, daß eine Kante L1 parallel zur resultierenden Schrumpfrichtung SRVA des Verbundfolienabschnittes VA verläuft. Damit ist erreicht, daß auch beim Schrumpfen in erster Linie die Dimension L1 des Verbundfolienabschnittes VA verkürzt wird, während ihre zweite Dimension L2 weitgehend erhalten bleibt. Damit eignet sich dieser Verbundfolienabschnitt VA für eine schrumpfbare Umhüllung, die um einen Gegenstand herumgelegt und durch Erhitzen auf diesen aufgeschrumpft werden kann. Da sich die Neigung zum Ein- bzw. Weiterreißen auch hier senkrecht zur resultierenden Schrumpfrichtung SRVA entwickelt, gilt auch hier, daß der Verbundfolienabschnitt aus den Flächenfolien F1 und F2 infolge ihrer unter einem Versetzungswinkel A bzw. B zur Kante L1 verlaufenden Schrumpfrichtungen SRF1 und SRF2 weitgehend reißfest ist.

Die auch bei Schrumpftemperatur fest haftende Verbindung zwischen den einzelnen Flächenfolien F1 und F2 erfolgt in diesem Ausführungsbeispiel entweder durch Zusammenpressen der Flächenfolien F1 und F2 bei erhöhter Temperatur oder auch dadurch, daß die Grenzflächen der beiden Flächenfolien F1 und F2 mit einem Vernetzer benetzt werden, der beim Verpressen reagiert, so daß die beiden Flächenfolien F1 und F2 fest haftend miteinander verbunden werden. Hierzu eignen sich besonders Peroxide oder ein geeignetes Coagenz.

Die Figur 3 zeigt ein Ausführungsbeispiel gemäß der Erfindung, bei dem die bereits zur Figur 2 beschriebenen Verhältnisse bezüglich des Verbundfolienaufbaus gelten, wobei zum Unterschied hierzu lediglich die fest haftende Verbindung der beiden Flächenfolien F1 und F2 mit einem Verbindungsmittel VF erfolgt, das als Zwischenschicht, zum Beispiel in Form einer Polymerschicht, vorzugsweise Ethylenvinylacetat (EVA), dazwischen eingebracht ist. Diese Zwischenschicht kann auch aus einem Reaktionskleber bzw. einem Reaktions-Hot-melt bestehen.

Weiterhin ist angedeutet, daß weitere Flächenfolien als Schichten, zum Beispiel aus einem der an sich bekannten Schmelzkleber aufgebracht werden können. In der gleichen Weise können jedoch auch zusätzliche schrumpfbare Flächenfolien aufgebracht werden, mit denen die Schrumpfeigenschaften in vielfacher Weise beeinflußt werden können.

Die Figur 4 zeigt nun ein Anwendungsbeispiel für eine der oben beschriebenen schrumpfbaren Verbundfolienabschnitte. So werden beispielsweise die nicht der Schrumpfung unterliegenden Längskanten L2 mit Verschlußelementen VS versehen, zum Beispiel mit hinterschnittenen Wülsten, die nach dem Umhüllen des Gegenstandes mit Hilfe einer klammerartigen Schiene S zusammengehalten werden. Auf diese Weise, können auch längere, ungeschnittene Gegenstände, zum Beispiel Kabel oder Kabelverbindungen, überdeckt werden. Nach dem Schließen der Umhüllung U erfolgt durch Zuführung von Wärme die Schrumpfung, so daß der Gegenstand dichtend umhüllt wird. In dieser Figur 4 ist weiter angedeutet, daß die resultierende Schrumpfrichtung SRVA der aus den Flächenfolien F1 und F2 gebildeten Umhüllung U in Richtung der Kante L1 verläuft, so daß beim Schrumpfen der Durchmesser verringert wird. Infolge der Anordnung der einzelnen Flächenfolien F1 und F2 ist die Neigung zum Ein- bzw. Weiterreißen in Längsrichtung der Umhüllung, das heißt senkrecht zur Schrumpfrichtung SRVA, weitestgehend verringert.

## Patentansprüche

1. Wärmeschrumpfbare Verbundfolie für die Herstellung von einreißfesten Umhüllungen, insbesondere für Rohre, Kabel, Kabelverbindungen oder dergleichen,
**dadurch gekennzeichnet,**
daß eine erste schrumpfbare Flächenfolie (F1) mit einer ersten Schrumpfrichtung (SRF1) auf einer zweiten schrumpfbaren Flächenfolie (F2) mit einer von der ersten Schrumpfrichtung (SRF1) unter einem Versetzungswinkel (A + B) abweichenden zweiten Schrumpfrichtung (SRF2) festhaftend so angeordnet ist, daß die Verbundfolie (V) bzw. ein Verbundfolienabschnitt (VA) eine resultierende, zwischen den Schrumpfrichtungen (SRF1, SRF2) der einzelnen Flächenfolien (F1, F2) liegende Schrumpfrichtung (SRV) aufweist.

2. Wärmeschrumpfbare Verbundfolie nach Anspruch 1,
**dadurch gekennzeichnet,**
daß aus der hergestellten Verbundfolie (V) Verbundfolienabschnitte (VA) so ausgeschnitten sind, daß die resultierende Schrumpfrichtung (SRVA) in Richtung der Sollschrumpfrichtung liegt und daß die eine Längskante (L1) parallel zur resultierenden Schrumpfrichtung (SRVA) verläuft.

3. Wärmeschrumpfbare Verbundfolie nach einem der vorhergehenden Ansprüche,
**dadurch gekennzeichnet,**
daß die Flächenfolien (F) gleiche Schrumpfgrade aufweisen.

4. Wärmeschrumpfbare Verbundfolie nach einem der Ansprüche 1 bis 2,
**dadurch gekennzeichnet,**
daß die Flächenfolien verschiedene Schrumpfgrade aufweisen.

5. Wärmeschrumpfbare Verbundfolie nach einem der vorhergehenden Ansprüche,
**dadurch gekennzeichnet,**
daß die Flächenfolien aus Polyethylen bestehen.

6. Wärmeschrumpfbare Verbundfolie nach einem der vorhergehenden Ansprüche,
**dadurch gekennzeichnet,**
daß die Flächenfolien durch Bestrahlung vernetzt sind.

7. Wärmeschrumpfbare Verbundfolie nach einem der Ansprüche 1 bis 5,
**dadurch gekennzeichnet,**
daß die Flächenfolien chemisch vernetzt sind.

8. Wärmeschrumpfbare Verbundfolie nach einem der vorhergehenden Ansprüche,
**dadurch gekennzeichnet,**
daß der gegenseitige Versetzungswinkel der Schrumpfrichtungen (SRF1, SRF2) der einzelnen Flächenfolien (F1, F2) ≦ 90 beträgt.

9. Wärmeschrumpfbare Verbundfolie nach einem der vorhergehenden Ansprüche,
**dadurch gekennzeichnet,**
daß die Flächenfolien (F1, F2) durch Druck bei erhöhter Temperatur festhaftend zusammengepreßt sind.

10. Wärmeschrumpfbare Verbundfolie nach einem der Ansprüche 1 bis 8,
**dadurch gekennzeichnet,**
daß ein Verbindungsmittel (VF), vorzugsweise ein Peroxid oder ein Coagenz in der Grenzfläche zwischen den Flächenfolien (F1, F2) angeordnet ist, das beim Zusammenpresen auf die Grenzflächen der Flächenfolien (F1, F2) vernetzend reagiert.

11. Wärmeschrumpfbare Verbundfolie nach Anspruch 10,
**dadurch gekennzeichnet,**
daß das Verbindungsmittel (VF) aus einer beim Zusammenpressen der Flächenfolien (F1, F2) vernetzenden Polymerschicht besteht.

12. Wärmeschrumpfbare Verbundfolie nach Anspruch 10,
**dadurch gekennzeichnet,**
daß das Verbindungsmittel (VF) aus einem Reaktionskleber bzw. Reaktions-Holtmelt besteht.

13. Wärmeschrumpfbare Verbundfolie nach einem der vorhergehenden Ansprüche,
**dadurch gekennzeichnet,**
daß zusätzliche Flächenfolien mit jeweils gegenseitig versetzten Schrumpfrichtungen festhaftend aufgebracht sind.

14. Wärmeschrumpfbare Verbundfolie nach einem der vorhergehenden Ansprüche,
**dadurch gekennzeichnet,**
daß entlang der beiden senkrecht zur resultierenden Schrumpfrichtung (SRVA) eines Verbundfolienabschnittes (VA) verlaufenden Längskanten (L2) Verschlußelemente (VS,S) angeordnet sind, welche nach Umlegen des als Umhüllung (U) ausgebildeten Verbundabschnittes (VA) um den zu umhüllenden Gegenstand in gegenseitigen Eingriff gebracht sind.

15. Wärmeschrumpfbare Verbundfolie nach einem der vorhergehenden Ansprüche,
**dadurch gekennzeichnet,**
daß zusätzliche Schichten (ZS), insbesondere aus Schmelzkleber aufgebracht sind.

## Claims

1. Heat-shrinkable composite sheet for the production of tearproof sheathings, in particular for pipes, cables, cable connections or the like, characterized in that a first shrinkable surface sheet (F1) with a first direction of shrinkage (SRF1) is arranged so that it adheres firmly on a second shrinkable surface sheet (F2) with a second direction of shrinkage (SRF2) which differs from the first direction of shrinkage (SRF1) by an angle of offset (A + B) such that the composite sheet (V) or a section (VA) of composite sheet has a resulting direction of shrinkage (SRV) which lies between the directions of shrinkage (SRF1, SRF2) of the individual surface sheets (F1, F2).

2. Heat-shrinkable composite sheet according to Claim 1, characterized in that sections (VA) of composite sheet are cut out of the composite sheet (V) produced, so that the resulting direction of shrinkage (SRVA) lies in the direction of the desired direction of shrinkage and that one longitudinal edge (L1) runs parallel to the resulting direction of shrinkage (SRVA).

3. Heat-shrinkable composite sheet according to one of the preceding claims, characterized in that the surface sheets (F) have the same degree of shrinkage.

4. Heat-shrinkable composite sheet according to one of claims 1 and 2, characterized in that the surface sheets have different degrees of shrinkage.

5. Heat-shrinkable composite sheet according to one of the preceding claims, characterized in that the surface sheets consist of polyethylene.

6. Heat-shrinkable composite sheet according to one of the preceding claims, characterized in that the surface sheets are crosslinked by irradiation.

7. Heat-shrinkable composite sheet according to one of Claims 1 to 5, characterized in that the surface sheets are chemically crosslinked.

8. Heat-shrinkable composite sheet according to one of the preceding claims, characterized in that the mutual angle of offset between the directions of shrinkage (SRF1, SRF2) of the individual surface sheets (F1, F2) is ≦ 90°.

9. Heat-shrinkable composite sheet according to one of the preceding claims, characterized in that the surface sheets (F1, F2) are pressed together so as to adhere firmly by means of pressure at elevated temperature.

10. Heat-shrinkable composite sheet according to one of Claims 1 to 8, characterized in that a joining agent (VF), preferably a peroxide or a coagent is arranged in the interface between the surface sheets (F1, F2), which joining agent has a crosslinking effect on the boundary layers of the surface sheets (F1, F2) when they are pressed together.

11. Heat-shrinkable composite sheet according to Claim 10, characterized in that the joining agent (VF) consists of a polymer layer which crosslinks when the surface sheets (F1, F2) are pressed together.

12. Heat-shrinkable composite sheet according to Claim 10, characterized in that the joining agent (VF) consists of a mixed adhesive or a mixed hot melt.

13. Heat-shrinkable composite sheet according to one of the preceding claims, characterized in that additional surface sheets with mutually offset directions of shrinkage are applied so as to adhere firmly.

14. Heat-shrinkable composite sheet according to one of the preceding claims, characterized in that closure elements (VSS), which are brought into mutual engagement after the composite section (VA) designed as a sheathing (U) has been laid around the object which is to be sheathed, are arranged along the two longitudinal edges (L2) running perpendicular to the resulting direction of shrinkage (SRVA) of a section (VA) of composite sheet.

15. Heat-shrinkable composite sheet according to one of the preceding claims, characterized in that additional layers (ZS), in particular of hot-melt adhesive, are applied.

## Revendications

1. Feuille composée thermorétractable pour la fabrication d'enveloppes résistantes à la déchirure, notamment pour tuyaux, câbles, raccords de câbles ou analogues,
caractérisée par le fait qu'une première feuille en nappe (F1) rétractable, ayant une première direction de rétraction (SRF1), est placée, de manière à y adhérer solidement, sur une seconde feuille en nappe (F2) rétractable, ayant une seconde direction de rétraction (SRF2) qui diffère de la première direction de rétraction (SRF1) selon un angle de décalage (A + B), si bien que la feuille composée (V), ou bien une longueur (VA) de la feuille composée, présente une direction résultante de rétraction (SRV), située entre les directions de rétraction (SRF1, SRF2) des feuilles en nappe (F1, F2) individuelles.

2. Feuille composée thermorétractable selon la revendication 1,
caractérisée par le fait que des longueurs de feuille composée (VA) sont découpées à partir de la feuille composée (V) préparée, de telle manière que la direction résultante de rétraction (SRVA) soit située dans la direction de la direction de rétraction de consigne, et qu'un bord longitudinal (L1) s'étende parallèlement à la direction résultante de rétraction (SRVA).

3. Feuille composée thermorétractable selon l'une des revendications précédentes,
caractérisée par le fait que les feuilles en nappe (F) présentent des degrés identiques de rétraction.

4. Feuille composée thermorétractable selon la revendication 1 ou 2,
caractérisée par le fait que les feuilles en nappe présentent des degrés différents de rétraction.

5. Feuille composée thermorétractable selon l'une des revendications précédentes,
caractérisée par le fait que les feuilles en nappe consistent en du polyéthylène.

6. Feuille composée thermorétractable selon l'une des revendications précédentes,
caractérisée par le fait que les feuilles en nappe sont réticulées par exposition à un rayonnement.

7. Feuille composée thermorétractable selon l'une des revendications 1 à 5,
caractérisée par le fait que les feuilles en nappe sont réticulées chimiquement.

8. Feuille composée thermorétractable selon l'une des revendications précédentes,
caractérisée par le fait que l'angle de décalage mutuel des directions de rétraction (SRF1, SRF2) des feuilles en nappe (F1, F2) individuelles est ≦ 90°.

9. Feuille composée thermorétractable selon l'une des revendications précédentes,
caractérisée par le fait que les feuilles en nappe (F1, F2) sont fermement pressées l'une contre l'autre, par application de pression sous une température augmentée.

10. Feuille composée thermorétractable selon l'une des revendications 1 à 8,
caractérisée par le fait qu'un moyen de fixation (VF), de préférence un peroxyde ou un agent chimique, est placé à l'interface entre les feuilles en nappe (F1, F2) et qu'il réagit, dans le sens de la réticulation, sur les interfaces des feuilles en nappe (F1, F2) lorsqu'elles sont pressées l'une contre l'autre.

11. Feuille composée thermorétractable selon la revendication 10,
caractérisée par le fait que le moyen de fixation (VF) consiste en une couche de polymère, à réticulation lorsque les feuilles en nappe (F1, F2) sont pressées l'une contre l'autre.

12. Feuille composée thermorétractable selon la revendication 10,
caractérisée par le fait que le moyen de fixation (VF) consiste en un liant de réaction ou en une colle thermofusible à réaction.

13. Feuille composée thermorétractable selon l'une des revendications précédentes,
caractérisée par le fait que des feuilles en nappe supplémentaires, ayant chaque fois des directions de rétraction mutuellement décalées, sont solidement appliquées.

14. Feuille composée thermorétractable selon l'une des revendications précédentes,
caractérisée par le fait qu'on prévoit, le long des deux bords longitudinaux (L2), s'étendant perpendiculairement à la direction résultante de rétraction (SRVA) d'une longueur de feuille composée (VA), des éléments de fermeture (VSS) qui, après la mise en place de la longueur de feuille composée (VA), en tant qu'enveloppe de protection (U), autour de l'objet à envelopper, sont amenés en contact mutuel.

15. Feuille composée thermorétractable selon l'une des revendications précédentes,
caractérisée par le fait que des couches supplémentaires (ZS), notamment en colle fusible, sont appliquées.
